(19) Europäisches Patentamt
European Patent Office
Office européen des brevets

(11) **EP 4 656 484 A1**

(12) **EUROPEAN PATENT APPLICATION**
published in accordance with Art. 153(4) EPC

(43) Date of publication:
**03.12.2025 Bulletin 2025/49**

(21) Application number: **23939329.1**

(22) Date of filing: **04.12.2023**

(51) International Patent Classification (IPC):
***B60W 30/19*** (2012.01)

(52) Cooperative Patent Classification (CPC):
Y02T 10/72

(86) International application number:
**PCT/CN2023/136197**

(87) International publication number:
**WO 2024/244360 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.05.2023 CN 202310619585**

(71) Applicant: **Voyah Automobile Technology Company Ltd.**
**Wuhan, Hubei 430050 (CN)**

(72) Inventors:
• **CHEN, Huajin**
**Wuhan, Hubei 430050 (CN)**
• **QU, Bin**
**Wuhan, Hubei 430050 (CN)**
• **CHEN, Kun**
**Wuhan, Hubei 430050 (CN)**
• **YUAN, Zhouli**
**Wuhan, Hubei 430050 (CN)**
• **LI, Pingfan**
**Wuhan, Hubei 430050 (CN)**
• **DING, Qing**
**Wuhan, Hubei 430050 (CN)**
• **FANG, Cheng**
**Wuhan, Hubei 430050 (CN)**
• **HUANG, Min**
**Wuhan, Hubei 430050 (CN)**
• **TANG, Zhiyao**
**Wuhan, Hubei 430050 (CN)**
• **YANG, Guangming**
**Wuhan, Hubei 430050 (CN)**

(74) Representative: **Boult Wade Tennant LLP**
**Salisbury Square House**
**8 Salisbury Square**
**London EC4Y 8AP (GB)**

(54) **CONTROL METHOD AND APPARATUS FOR SUPPRESSING GEAR CHANGING VIBRATION OF ELECTRIC VEHICLE, AND DEVICE AND MEDIUM**

(57) The present article discloses a control method and a control apparatus for suppressing gear shift vibration in the electric vehicle, and a device and a medium. The control method includes: acquiring a gear rotation distance when a gear-meshing action is started during gear shift of a vehicle; controlling the electric motor to execute the gear-meshing action in response to the gear rotation distance being smaller than the set distance, such that the gear-meshing action is started at the first time; controlling the electric motor to execute the gear-meshing action with a target gear-meshing torque until the gear-meshing action is completed in response to the gear rotation distance being greater than or equal to the set distance, and smaller than or equal to an actual gear clearance of the electric motor.

Acquiring a gear rotation distance when a gear-meshing action is started during gear shift of a vehicle — S110

Controlling an electric motor to execute the gear-meshing action with a minimum gear-meshing torque in response to the gear rotation distance being smaller than a set distance — S120

Controlling the electric motor to execute the gear-meshing action with a target gear-meshing torque until the gear-meshing action is completed in response to the gear rotation distance being greater than or equal to the set distance, and smaller than or equal to an actual gear clearance of the electric motor, where the target gear-meshing torque is smaller than the minimum gear-meshing torque — S130

FIG. 1

## Description

### CROSS-REFERENCE TO RELATED APPLICATIONS

The present application claims priority to the Chinese patent application No. 202310619585.4, and filed on May 29, 2023. The disclosure of the aforementioned application is hereby incorporated by reference in its entirety.

### TECHNICAL FIELD

The present disclosure relates to the field of the vehicle control technology, and in particular, to a control method and an apparatus for suppressing gear shift vibration in an electric vehicle, and a device and a medium.

### BACKGROUND

Gear-meshing is required when performing dynamic gear changing in an electric vehicle, and the vehicle will vibrate due to rotation speed and torque impacts during gear-meshing. VCU (vehicle control unit, vehicle controller) is configured to provide a torque instruction to an electric motor according to gear information, and change a direction of the torque instruction when gear shift information is received. Due to gear clearance existed in the electric motor, the torque instruction when the electric motor is in the actual gear-meshing, is not zero, but rises up from zero to a significant value, which results in larger torque and rotation speed in the actual gear-meshing, causing larger vibration.

Therefore, how to reduce the vibration of the electric motor in actual gear-meshing is currently a technical problem that urgently needs to be solved.

### SUMMARY

By using a control method and an apparatus for suppressing gear shift vibration in an electric vehicle, and a device and a medium according to one or more embodiments of the present disclosure, the electric motor torque can be reduced when a gear rotation distance approaches gear clearance, and the gear continues to rotate relying on inertia until the gear-meshing is completed, so that the electric motor has smaller torque and a lower rotation speed at the moment of the actual gear-meshing, thereby minimizing vibration of the electric motor.

In a first aspect, the present disclosure provides a control method for suppressing gear shift vibration in an electric vehicle, including: acquiring a gear rotation distance when a gear-meshing action is started during gear shift of a vehicle; controlling an electric motor to execute the gear-meshing action with a minimum gear-meshing torque in response to the gear rotation distance being smaller than a set distance, where the minimum gear-meshing torque is minimum torque, which is pre-calibrated and required by the electric motor to rotate at a rotation speed greater than a set rotation speed value in a set gear of the vehicle; and controlling the electric motor to execute the gear-meshing action with target gear-meshing torque until the gear-meshing action is completed, in response to the gear rotation distance being greater than or equal to the set distance, and smaller than or equal to an actual gear clearance of the electric motor, where the target gear-meshing torque is smaller than the minimum gear-meshing torque.

In a second aspect, the present disclosure provides a control apparatus for suppressing gear changing vibration in an electric vehicle, including: an acquiring module, configured to acquire a gear rotation distance when a gear-meshing action is started during gear shift of a vehicle; a first control module, configured to control an electric motor to execute the gear-meshing action with minimum gear-meshing torque in response to the gear rotation distance being smaller than a set distance, where the minimum gear-meshing torque is minimum torque, which is pre-calibrated and required by the electric motor to rotate at a rotation speed greater than a set rotation speed value in a set gear of the vehicle; and a second control module, configured to control the electric motor to execute the gear-meshing action with target gear-meshing torque until the gear-meshing action is completed, in response to the gear rotation distance being greater than or equal to the set distance, and smaller than or equal to an actual gear clearance of the electric motor, where the target gear-meshing torque is smaller than the minimum gear-meshing torque.

In a third aspect, the present disclosure provides an electronic device, including: a memory and a processor, where the memory and the processor is in a communication connection with each other, the memory stores a computer instruction, and the processor executes the computer instruction to implement the control method as described in the first aspect.

In a fourth aspect, the present disclosure provides a computer-readable storage medium, including a computer instructions stored thereon; where the computer instructions, when executed by a computer, cause the computer to implement the control method as described in the first aspect.

The above description is only an overview of the technical solution of the present disclosure. In order to understand the technical means of the present disclosure more clearly, and implement according to the content of the specification, and in order to make the above and other objectives, features and advantages of the present disclosure more obvious and easy to understand, the following specific implementations of the present disclosure are particularly provided.

## BRIEF DESCRIPTION OF DRAWINGS

FIG. 1 shows a flowchart diagram of a control method for suppressing gear shift vibration in an electric vehicle according to some embodiments of the present disclosure.

FIG. 2 shows a structural block diagram of a control apparatus for suppressing gear shift vibration in an electric vehicle according to some embodiments of the present disclosure.

## DESCRIPTION OF EMBODIMENTS

In order to make the objectives, technical solutions and advantages of the present disclosure more clear, the implementations of the present disclosure will be further described in detail with reference to the accompanying drawings below.

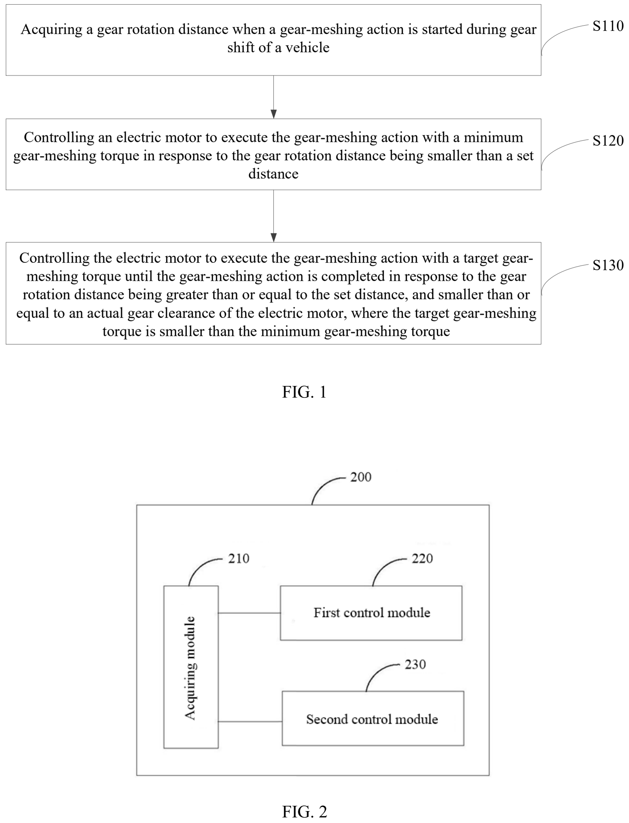

FIG. 1 is a flowchart of a control method for suppressing gear shift vibration in an electric vehicle provided in an embodiment of the present disclosure. As shown in FIG. 1, the control method includes step S110 to stepS130.

Step S 110: acquiring a gear rotation distance when a gear-meshing action is started during gear changing of a vehicle.

In some embodiments, the gear shift of the vehicle includes gear of the vehicle is shifted from a first gear to a second gear or from a second gear to a first gear. Where, the first gear can be a reverse gear (i.e., R gear), and the second gear can be a drive gear (i.e., D gear). The gear rotation distance can be acquired by a device such as a sensor, which is not limited in the present disclosure.

Step S120: controlling an electric motor to execute the gear-meshing action with minimum gear-meshing torque in response to the gear rotation distance being smaller than a set distance.

The minimum gear-meshing torque is minimum torque, which is pre-calibrated and required by the electric motor to rotate at a rotation speed greater than a set rotation speed value in a set gear of the vehicle.

In some embodiments, the set gear can be the first gear (i.e., R gear) or the second gear (i.e., D gear). The set rotation speed value can be set according to actual needs, for example, the set rotation speed value can be 10 r/min.

In some embodiments, the step S120 includes: controlling the electric motor to execute the gear-meshing action with first minimum gear-meshing torque when the gear of the vehicle is shifted from the second gear to the first gear, where the first minimum gear-meshing torque is torque executed by the electric motor corresponding to the gear of the vehicle being in the first gear and the electric motor being at the set rotation speed; and controlling the electric motor to execute the gear-meshing action with second minimum gear-meshing torque when the gear of the vehicle is shifted from the first gear to the second gear, where the second minimum gear-meshing torque is torque executed by the electric motor corresponding to the gear of the vehicle being in the second gear and the electric motor being at the set rotation speed.

It should be noted that, when the gear of the vehicle is shifted from the first gear to the second gear or from the second gear to the first gear, the electric motor torque changes from positive to negative or from negative to positive, thus the torque will exhibit a zero-crossing phenomenon, the zero-crossing of the torque includes rising zero-crossing of the torque and falling zero-crossing of the torque. The rising zero-crossing of the torque is the torque crossing zero during its change from a negative value to a positive value. The falling zero-crossing of the torque is the torque crossing zero during its change from a positive value to a negative value.

In some embodiments, when the gear of the vehicle is shifted from the second gear (D gear) to the first gear (R gear), a VCU torque instruction Vcu_Trqcmd_DR can be acquired when actual torque of the electric motor crosses zero, and when the VCU torque instruction is [Vcu_Trqcmd_DR, 0], it indicates that the torque of the electric motor is in the falling zero-crossing. At this moment, the torque executed by the electric motor may be set to be the first minimum gear-meshing torque $T_{Rmin}$.

When the gear of the vehicle is shifted from the first gear (R gear) to the second gear (D gear), a VCU torque instruction Vcu_Trqcmd_RD can be acquired when actual torque of the electric motor crosses zero, and when the VCU torque instruction is [0, Vcu_Trqcmd_RD], it indicates that the torque of the electric motor is in the rising zero-crossing. At this moment, the torque executed by the electric motor may be set to be the second minimum gear-meshing torque $T_{Dmin}$.

In some embodiments, before executing the step S120, the control method further includes: acquiring the first minimum gear-meshing torque and the second minimum gear-meshing torque that are pre-calibrated.

Exemplarily, the first minimum gear-meshing torque and the second minimum gear-meshing torque can be acquired by the following calibration method.

When the whole vehicle is stationary, the gear of the vehicle is controlled to be the first gear (i.e., R gear), initial torque of the electric motor is set, and the torque executed by the electric motor is controlled to increase from the initial torque to maximum torque of the electric motor with a set torque step size. During the increasing process of the torque executed by the electric motor, the torque executed by the electric motor at this time of the electric motor being detected to rotate at a rotation speed greater than the set rotation speed value is determined as the minimum gear-meshing torque corresponding to the vehicle in the first gear, which is recorded as the first minimum gear-meshing torque $T_{Rmin}$.

When the whole vehicle is stationary, the gear of the vehicle is controlled to be the second gear (i.e., D gear), initial torque of the electric motor is set, and the torque executed by the electric motor is controlled to increase from the initial torque to a maximum torque of the electric motor with a set torque step size. During the increasing process of the torque executed by the electric motor, the torque executed by the electric motor at this time of the electric motor being detected to rotate at a rotation speed greater than the set rotation speed value is determined as the minimum gear-meshing torque corresponding to the vehicle in the second gear, which is recorded as the second minimum gear-meshing torque $T_{Dmin}$.

The above initial torque and the set torque step size can be set according to actual needs. For example, the initial torque is 2 N·m, and the set torque step size is 1 N·m.

Step S130: controlling the electric motor to execute the gear-meshing action with target gear-meshing torque until the gear-meshing action is completed in response to the gear rotation distance being greater than or equal to the set distance, and smaller than or equal to an actual gear clearance of the electric motor, where the target gear-meshing torque is smaller than the minimum gear-meshing torque.

In some embodiments, in the step S130, the controlling the electric motor to execute the gear-meshing action with the target gear-meshing torque includes: controlling the torque executed by the electric motor to decay from the minimum gear-meshing torque with a set slope during the gear-meshing process of the electric motor.

In some embodiments, the step S130 may include: when the gear of the vehicle is shifted from the second gear to the first gear (i.e., from the D gear to the R gear), controlling the torque executed by the electric motor to linearly decay from the first minimum gear-meshing torque $T_{Rmin}$ with a first slope $\beta_R$ to cause the torque executed by the electric motor to decay to 0 before the gear engagement process is completed, in response to the gear rotation distance being greater than or equal to a first set distance and being smaller than or equal to the actual gear clearance L of the electric motor.

The specific expression is as follows:

$$ Trq\_ref = \begin{cases} T_{Rmin} & L_R < \alpha_R \cdot L \\ \beta_R \cdot \dfrac{L - L_R}{L - \alpha_R \cdot L} \cdot T_{Rmin} & L_R \geq \alpha_R \cdot L \end{cases} $$

where, is the torque executed by the electric motor, $T_{Rmin}$ is the first minimum gear-meshing torque, is the gear rotation distance which can be calculated by integrating the rotation speed of the electric motor with time, is the first set distance, and is a coefficient item determined by calibration; $\beta_R$ is the first slope, and L is the actual gear clearance.

When the gear of the vehicle is shifted from the first gear to the second gear (i.e., from the R gear to the D gear), controlling the torque executed by the electric motor to linearly decay from the second minimum gear-meshing torque $T_{Dmin}$ with a second slope $\beta_D$ to cause the torque executed by the electric motor to decay to 0 before the gear-meshing process is completed, in response to the gear rotation distance being greater than or equal to a second set distance and being smaller than or equal to the actual gear clearance of the electric motor L.

The specific expression is as follows:

$$ Trq\_ref = \begin{cases} T_{Dmin} & L_D < \alpha_D \cdot L \\ \beta_D \cdot \dfrac{L - L_D}{L - \alpha_D \cdot L} \cdot T_{Dmin} & L_D \geq \alpha_D \cdot L \end{cases} $$

where, is the torque executed by the electric motor, $T_{Dmin}$ is the second minimum gear-meshing torque, is the gear rotation distance which can be calculated by integrating the rotation speed of the electric motor with time, is the second set distance, and is a coefficient item determined by calibration; $\beta_D$ is the second slope, and L is the actual gear clearance.

The torque executed by the electric motor is controlled to linearly decay to 0 from the minimum gear-meshing torque with the set slope when the gear rotation distance is the set distance $\alpha \cdot L$, such as the first set distance or the second set distance. Within range of the actual gear clearance L, the torque of the electric motor begins to decrease when the gear rotation distance reaches the $\alpha \cdot L$ position, allowing the gear to continue to rotate by inertia in a remaining gear-meshing distance until the gear-meshing action is completed, so that the electric motor has smaller torque and a lower rotation speed at the moment of the actual gear-meshing, which can minimize the vibration of the electric motor.

In some embodiments, before executing the step S130, the control method can further include: acquiring the actual gear clearance of the electric motor.

In some embodiments, the actual gear clearance of the electric motor can be acquired by the following method: controlling the whole vehicle to perform dynamic gear shift, recording a relationship curve between the rotation speed of the electric motor and time within the time period from the torque of the electric motor crossing zero to the rotation speed occurring obvious vibration; calculating the actual gear clearance by integrating the rotation speed with the time according to the relationship curve between the rotation speed of the electric motor and the time.

Exemplarily, the rotation speed can further be low-pass filtered before the calculation of the actual gear clearance, and the actual gear clearance is calculated by integrating a low-pass filtered rotation speed with time, which can make the calculation of the actual gear clearance more accurate. The actual gear clearance of the electric motor can be calculated by the following formula (1) and (2):

$$\text{Spd\_motor\_flt(k)} = (1 - 2\pi T \cdot 10) \cdot \text{Spd\_motor\_flt(k} - 1) +$$

$$2\pi T \cdot 10 \cdot \text{Spd\_motor(k)}; \tag{1}$$

$$L = \int_0^t \text{Spd\_motor\_flt(k)} \cdot dt; \tag{2}$$

where, T is a filter function execution cycle; is an output value of a filtered rotation speed; is an output of the filtered rotation speed of the last cycle; is an input value of the current rotation speed; is a gear-meshing time, that is, the time from the actual torque crossing zero to the rotation speed obvious fluctuation before filtering; and L is the actual gear clearance.

In some embodiments, before performing the steps S120 and S130, the control method can further include: acquiring the set distance and the set slope determined according to a set calibration method.

In some embodiments, the set calibration method includes:

setting the torque executed by the electric motor to be the minimum gear-meshing torque corresponding to a target gear when the gear position of the vehicle is shifted to the target gear and the gear-meshing action is started;

controlling the set distance to increase gradually from an initial distance to a target distance with a first step size, and controlling the set slop to increase from 0 to 1 with a second step size at a different set distance, and recording a combination of the set distance and the set slope that satisfy a set condition; where the set condition includes that when the gear rotation distance is the set distance, the torque executed by the electric motor linearly decay from the minimum gear-meshing torque with the set slope, the torque executed by the electric motor can decay to 0 before the gear-meshing action is completed;

selecting a group of the set distance and the set slope with a minimum fluctuation mount of the rotation speed of the electric motor for calibrating from the combinations of the set distance and the set slope that satisfy the set condition.

In some embodiments, the set distance includes a first set distance $\alpha_R \cdot L$ and a second set distance $\alpha_D \cdot L$, and the set slope includes a first slope $\beta_R$ and a second slope $\beta_D$.

The calibration method for the first set distance $\alpha_R \cdot L$ and the first slope $\beta_R$ specifically includes:

when the gear of the vehicle is shifted from the second gear to the first gear (i.e., from the D gear to the R gear), during the torque of the electric motor crossing zero, setting the torque executed by the electric motor to be the first minimum gear-meshing torque $T_{Rmin}$, and controlling $\alpha$ to increase from 0 to 1 with the first step size, and for each value of the $\alpha$, controlling $\beta$ to increase from 0 to 1 with the second step size, and recording combinations of the $\alpha$ and the $\beta$ that satisfy set conditions; where the set conditions include that when the gear rotation distance is $\alpha \cdot L$, the torque executed by the electric motor linearly decay from the minimum gear-meshing torque with the set slope $\beta$, the torque executed by the electric motor can decay to 0 before the gear-meshing action is completed; selecting a group of the $\alpha$ and the $\beta$ with a minimum fluctuation mount of the rotation speed to record as $\alpha_R$ and $\beta_R$ from the combinations of the $\alpha$ and the $\beta$ that satisfy the set conditions, such that the first set distance $\alpha_R \cdot L$ and the first slope $\beta_R$ are calibrated.

The calibration method for the second set distance $\alpha_D \cdot L$ and the second slope $\beta_D$ specifically includes:

when the gear of the vehicle is shifted from the first gear to the second gear (i.e., from the R gear to the D gear), during the torque of the electric motor crossing zero, setting the torque executed by the electric motor to be the second minimum gear-meshing torque $T_{Dmin}$, and controlling $\alpha$ to increase from 0 to 1 with the first step size, and for each value of the $\alpha$, controlling $\beta$ to increase from 0 to 1 with the second step size, and recording combinations of the $\alpha$ and the $\beta$ that satisfy set conditions; where the set conditions include that when the gear rotation distance is $\alpha*L$, the torque executed by the electric motor linearly decay from the minimum gear-meshing torque with the set slope $\beta$, the torque executed by the electric motor can decay to 0 before the gear-meshing action is completed; selecting a group of the $\alpha$ and the $\beta$ with a minimum fluctuation mount of the rotation speed to record as $\alpha_D$ and $\beta_D$ from the combinations of the $\alpha$ and the $\beta$ that satisfy the set conditions, such that the second set distance $\alpha_D \cdot L$ and the second slope $\beta_D$ are calibrated.

The above first step size and second step size can be set according to actual needs, for example, both of the first step size and the second step size are set to 0.1. These are not limited in the embodiments of the present disclosure.

In some embodiments, the control method further includes:

when the gear-meshing action is started during the gear shift of the vehicle, acquiring torque of the electric motor and performing an active compensation on the torque of the electric motor until the gear-meshing action is completed.

In some embodiments, the performing the active compensation on the torque of the electric motor may include the following steps.

Step 1: acquiring a current rotation speed of the electric motor, and performing two low-pass filtering processes on the rotation speed.

In some embodiments, in order to ensure smoothness of the filtered rotation speed, the rotation speed is subjected to two low-pass filtering processes. The rotation speed can be subjected to two low-pass filtering processes by the following formula (3) and (4):

$$\text{Spd\_motor\_flt(k)} = \left(1 - 2\pi T_{spdflt} \cdot f_{cut-off}\right) \cdot \text{Spd\_motor\_flt(k} - 1) +$$

$$2\pi T_{spdflt} \cdot f_{cut-off} \cdot \text{Spd\_motor(k)} \tag{3}$$

$$\text{Spd\_motor\_flt\_2(k)} = \left(1 - 2\pi T_{spdflt} \cdot f_{cut-off}\right) \cdot \text{Spd\_motor\_flt\_2(k} - 1) +$$

$$2\pi T_{spdflt} \cdot f_{cut-off} \cdot \text{Spd\_motor\_flt(k)} \tag{4}$$

where, is an output of a current filtered rotation speed; is a filter function execution cycle; is filtering cut-off frequency, with a value range of 3 Hz - 5 Hz, and determined by calibration; is an output of a filtered rotation speed of the last cycle; is an input of a current rotation; is an output of a current filtered rotation speed of second low-pass filtering; is an output of a filtered rotation speed of the last cycle of the second low-pass filtering.

Step 2: determining an acceleration of the electric motor according to a low-pass filtered rotation speed, and performing filtering on the acceleration of the electric motor.

In some embodiments, an acceleration value of the electric motor is calculated by using a ratio of a difference between the rotation speed of the current cycle and the rotation speed of the last cycle to cycle time. To ensure the smoothness of an acceleration curve, the calculation is performed by using the above-mentioned rotation speed after being low-pass filtered once, and the calculated acceleration is low-pass filtered .

Exemplarily, the acceleration of the electric motor can be determined by the following formula (5), and the acceleration of the electric motor can be filtered by the following formula (6):

$$\text{Acc\_Spd} = \frac{\text{Spd\_motor\_flt(k)} - \text{Spd\_motor\_flt(k} - 1)}{T_{acc}} \tag{5}$$

$$\text{Acc\_Spd\_flt(k)} = \left(1 - 2\pi T_{acc} \cdot f_{cut\_off\_acc}\right) \cdot \text{Acc\_Spd\_flt(k} - 1) +$$

$$2\pi T_{acc} \cdot f_{cut\_off\_acc} \cdot \text{Acc\_Spd(k)} \tag{6}$$

where, Acc_Spd is the acceleration; Spd_motor_flt(k) is the output of the current filtered rotation speed; Spd_motor_flt(k-1) is the output of the filtered rotation speed of the last cycle; $T_{acc}$ is an acceleration calculation function execution cycle; Acc_Spd_flt(k) is an output value of a filtered acceleration; $f_{cut\_off\_acc}$ is a filtered acceleration cut-off frequency; Acc_Spd_flt(k-1) is the output of the filtered rotation speed of the last cycle; and Acc_Spd(k) is an input value of a current acceleration.

Step 3: performing phase compensation on the rotation speed using a filtered acceleration of the electric motor.

In some embodiments, the phase compensation is performed on the rotation speed after being low-pass filtered twice in the first step by using the acceleration calculated in the second step. Compensation for the phase delay generated by the filtering is performed in combination with the actual frequency and the cut-off frequency of the electric motor. The specific formula is as follows:

$$Spd\_flt\_Phase\_comp = \frac{2}{2\pi T_{spdflt} \cdot f_{cut-off}} \cdot Acc\_Spd\_flt(k) \qquad (7)$$

$$Spd\_flt\_phase = Spd\_motor\_flt\_2(k) + Spd\_flt\_Phase\_comp \qquad (8)$$

where, $Spd\_flt\_Phase\_comp$ is a rotation speed compensation amount for the phase delay generated by the filtering; $T_{spdflt}$ is the filter function execution cycle; $f_{cut-off}$ is the filtering cut-off frequency, with a value range of 3 Hz - 5 Hz and determined by calibration; $Acc\_Spd\_flt(k)$ is the output value of the filtered acceleration; $Spd\_flt\_phase$ is a value of the rotation speed of the electric motor after filtering and phase compensation; $Spd\_motor\_flt\_2(k)$ is the output of the current filtered rotation speed after the second low-pass filtering.

It can be seen from the above formulas that a coefficient consisted of the filter function execution cycle and the filtering cut-off frequency is directly used as a phase compensation coefficient of the acceleration of the electric motor, and the calibration for the delayed phase compensation coefficient of the filtered acceleration of the electric motor under different speeds and torques is not required, which is simpler.

Step 4: calculating a torque compensation amount after a PI loop regulation by setting a rotation speed after filtering and phase compensation as a given value, and an original rotation speed of the electric motor as a feedback value.

Exemplarily, the torque compensation amount can be calculated according to the following formula (9):

$$Trq\_comp = \left(k_p + \int k_i\right) \cdot (Spd\_flt\_phase - Spd\_motor(k)) \qquad (9)$$

where, $Trq\_comp$ is the torque compensation amount; $k_p$ is a proportional parameter of a torque compensation loop; an $k_i$ is an integral parameter of the torque compensation loop. $Spd\_flt\_phase$ is the value of the rotation speed of the electric motor after filtering and phase compensation, which can be calculated by the above formula (8); and $Spd\_motor(k)$ is the input of the current rotation speed.

The torque compensation amount is directly calculated by the PI loop regulation, and the calibration for the torque compensation amount under different speeds and torque is not required, which significantly reduces the workload.

Step 5: limiting the torque compensation amount.

Exemplarily, the torque compensation amount can be limited by the following formula:

$$Trq\_comp\_lmt = \begin{cases} -0.05 \cdot Tmax & Trq\_comp \leq -0.05 \cdot Tmax \\ Trq\_comp & -0.05 \cdot Tmax < Trq\_comp < 0.05 \cdot Tmax \\ 0.05 \cdot Tmax & Trq\_comp \geq 0.05 \cdot Tmax \end{cases}$$

where, $Trq\_comp\_lmt$ is compensated torque after the limiting process, $Tmax$ is the maximum torque of the electric motor, and $Trq\_comp$ is the torque compensation amount.

Step 6: performing compensation on the torque of the electric motor according to a limited torque compensation amount.

In some embodiments, the above calculated compensation torque is compensated to current given torque based on a torque range in which the compensation is allowed. Specifically, the compensation for the given torque is performed according to the following formula:

$$Trq\_ref\_comp = \begin{cases} Trq\_ref & Trq\_ref \leq -0.6 \cdot Tmax \\ Trq\_ref + Trq\_comp\_lmt & -0.6 \cdot Tmax < Trq\_comp < 0.6 \cdot Tmax \\ Trq\_ref & Trq\_ref \geq 0.6 \cdot Tmax \end{cases}$$

where, is a torque instruction after compensation, and is torque executed by the electric motor before compensation.

A real-time fluctuation amount of the rotation speed of the electric motor is calculated by performing filtering and phase compensation on the rotation speed, then the PI regulation is performed on the fluctuation amount of the rotation speed to output the torque compensation amount, active compensation is performed to the torque executed by the electric motor, and the compensated torque is precisely regulated without calibration, so as to further suppress the rotation speed fluctuation of the electric motor during gear shift.

Based on same invention concept, embodiments of the present disclosure further provide a control apparatus for a cooling oil pump of an oil-cooled electric motor. FIG. 2 is a structural block diagram of a control apparatus for suppressing gear shift vibration in an electric vehicle according to some embodiments of the present disclosure. As shown in FIG. 2, the control apparatus 200 includes an acquiring module 210, a first control module 220 and a second control module 230.

The acquiring module 210 is configured to acquire a gear rotation distance when a gear-meshing action is started during gear shift of a vehicle.

The first control module 220 is configured to control an electric motor to execute the gear-meshing action with minimum gear-meshing torque in response to the gear rotation distance being smaller than a set distance; where the minimum gear-meshing torque is minimum torque, which is pre-calibrated and required by the electric motor to rotate at a rotation speed greater than a set rotation speed value in a set gear of the vehicle.

The second control module 230 is configured to control the electric motor to execute the gear-meshing action with target gear-meshing torque until the gear-meshing action is completed in response to the gear rotation distance being greater than or equal to the set distance, and smaller than or equal to an actual gear clearance of the electric motor, where the target gear-meshing torque is smaller than the minimum gear-meshing torque.

In some embodiments, the second control module 230 is further configured to:
control torque executed by the electric motor to decay from the minimum gear-meshing torque with a set slope during the gear-meshing process of the electric motor.

In some embodiments, the first control module 220 is further configured to:

control the electric motor to execute the gear-meshing action with a first minimum gear-meshing torque when a gear of the vehicle is shifted from a second gear to a first gear, where the first minimum gear-meshing torque is torque executed by the electric motor corresponding to the gear of the vehicle being in the first gear and the electric motor being at the set rotation speed;
and control the electric motor to execute the gear-meshing action with second minimum gear-meshing torque when the gear of the vehicle is changed from the first gear to the second gear, where the second minimum gear-meshing torque is torque executed by the electric motor corresponding to the gear position of the vehicle being in the second gear and the electric motor being at the set rotation speed.

In some embodiments, the second control module 230 is further configured to:

when the gear of the vehicle is shifted from the second gear to the first gear, control the torque executed by the electric motor to linearly decay from the first minimum gear-meshing torque with a first slope to cause the torque executed by the electric motor to decay to 0 before the gear-meshing process is completed, in response to the gear rotation distance being greater than or equal to a first set distance and being smaller than or equal to the actual gear clearance of the electric motor;
when the gear of the vehicle is shifted from the first gear to the second gear, control the torque executed by the electric motor to linearly decay from the second minimum gear-meshing torque with a second slope to cause the torque executed by the electric motor to decay to 0 before the gear-meshing process is completed, in response to the gear rotation distance being greater than or equal to a second set distance and being smaller than or equal to the actual gear clearance of the electric motor.

In some embodiments, the acquiring module 210 is further configured to:

acquire the set distance and the set slope determined by a set calibration method;
where, the set calibration method includes:

setting the torque executed by the electric motor to be the minimum gear-meshing torque corresponding to a target gear when the gear position of the vehicle is shifted to the target gear and the gear-meshing action is started; controlling the set distance to increase gradually from an initial distance to a target distance with a first step size, and controlling the set slop to increase from 0 to 1 with a second step size at a different set distance, and recording a combination of the set distance and the set slope that satisfy a set condition; where the set condition includes that when the gear rotation distance is the set distance, the torque executed by the electric motor linearly decay from the minimum gear-meshing torque with the set slope, the torque executed by the electric motor can decay to 0 before the gear-meshing action is completed;
selecting a group of the set distance and the set slope with a minimum fluctuation of the rotation speed of the electric motor for calibrating from the combination of the set distance and the set slope that satisfy the set condition.

In some embodiments, the control apparatus 200 further includes a torque compensation module, which is configured to:

when the gear-meshing action is started during the gear shift of the vehicle, acquire torque of the electric motor and perform an active compensation on the torque of the electric motor until the gear-meshing action is completed.

In some embodiments, the torque compensation module is further configured to:

acquire a current rotation speed of the electric motor, and perform two low-pass filtering processes on the rotation speed;

determine an acceleration of the electric motor according to a low-pass filtered rotation speed, and perform filtering on the acceleration of the electric motor;

perform phase compensation to the rotation speed using a filtered acceleration of the electric motor;

calculate a torque compensation amount after a PI loop regulation by setting a rotation speed after filtering and phase compensation as a given value, and an original rotation speed of the electric motor as a feedback value;

limit the torque compensation amount; and

perform compensation on the torque of the electric motor according to a limited torque compensation amount.

It can be understood that the control apparatus provided by the above embodiments is only illustrated exemplarily by the division of the above various function modules, and in actual applications, the above functions can be allocated to different function modules according to needs, that is, the internal structure of the control apparatus is divided into different function modules to complete all or part of the above-described functions.

The present disclosure further provides an electronic device, where the electronic device may include a processor and a memory, and the processor and the memory are in a communication with each other via a bus or other means.

The processor can be a central processing unit (Central Processing Unit, CPU), or an application specific integrated circuit (APPlication SPecific Integrated Circuit, ASIC), or can be configured to implement one or more integrated circuits of an embodiment of the present disclosure.

The memory may include a bulk memory for data or instructions. By way of embodiment and not limitation, the memory may include a hard disk drive (Hard Disk Drive, HDD), a floppy disk drive, a flash memory, a CD, an optical disk, a tape, or a universal serial bus (Universal Serial Bus, USB) drive, or a combination of two or more of these. The memory may include removable or non-removable (or fixed) media in appropriate cases. The memory can be inside or outside of the electronic device in appropriate cases. In a specific embodiment, the memory can be non-volatile solid state memory.

In one embodiment, the memory can be a read only memory (Read Only Memory, ROM). In one embodiment, the ROM can be a mask-programmed ROM, a programmable ROM (PROM), an erasable PROM (EPROM), an electrically erasable PROM (EEPROM), an electrically alterable ROM (EAROM), a flash memory, or a combination of two or more of these.

The processor is configured to achieve any one of the control methods according to the above embodiments by reading and executing the computer program instructions stored in the memory.

In an example, the electronic device can include a communication interface and a bus. Where, the processor, the memory, and the communication interface are connected and communicated with each other through the bus. The communication interface is mainly configured to achieve communication between various modules, apparatuses, units and/or devices in the embodiments of the present disclosure. The buses may include one or more buses in appropriate cases.

In some embodiments, the embodiments of the present disclosure can provide a computer-readable storage medium to achieve the control method in the above embodiments. The computer-readable storage medium is stored with computer program instructions; the computer program instructions are executed by the processor to achieve any one of the control methods in the above embodiments.

The technical solution in the above embodiment of the present disclosure at least has the following technical effects or advantages.

The embodiments of the present disclosure provide the control method and the control apparatus for suppressing gear shift vibration in the electric vehicle, and device and medium. The gear rotation distance is acquired when the gear-meshing action is started during the gear shift of the vehicle, and the torque of the electric motor is controlled according to the gear rotation distance. The electric motor is controlled to execute the gear-meshing action in response to the gear rotation distance being smaller than the set distance, such that the gear-meshing action is started at the first time. The electric motor is controlled to execute the gear-meshing action with the target gear-meshing torque until the gear-meshing action is completed in response to the gear rotation distance being greater than or equal to the set distance, and smaller than or equal to the actual gear clearance of the electric motor. Since the target gear-meshing torque is smaller than the minimum gear-meshing torque, the torque of the electric motor can be further reduced in latter half of the gear-meshing, until the gear-meshing action is completed, so that at the actual gear-meshing instant, the torque of the electric motor is smaller, and the rotation speed is lower, thereby minimizing the vibration of the electric motor.

The specification provided herein contains a large amount of specific details. However, it can be understood that the embodiments of the present disclosure can be implemented without these specific details. In some examples, well-known methods, structures, and techniques are not illustrated in detail so as not to obscure the understanding of this specification.

Similarly, it should be understood that, for the sake of conciseness of the present disclosure and in order to assist in understanding one or more aspects of the present invention, various features of the present disclosure are sometimes grouped together in a single embodiment, figure, or description thereof in the description of the exemplary embodiments of the present disclosure as above. However, the disclosed method should not be interpreted as reflecting the intention that: the claimed disclosure requires more features than the features explicitly recited in each claim. More particularly, as reflected in the following claims, the aspect of the invention lies in having fewer features than all the features of the single embodiment disclosed as above. Thus, the claims that follow the specific implementation are hereby explicitly incorporated into the specific implementation, where each claim itself serves as a separate embodiment of the present disclosure.

It should be noted that the above embodiment are for illustrating, rather than limiting, the present disclosure, and that those skilled in the art may design alternative embodiments without departing from the scope of the appended claims. In the claims, any reference signs located within parentheses should not be constructed as limitations on the claims. The word "include" does not exclude the presence of components or steps that are not listed in the claims. The word "one" or "a" before the component does not exclude the existence of multiple such components. The present disclosure can be implemented with a hardware including several different components and with a computer programmed appropriately. In an unit claim listing several devices, some of these devices can be embodied specifically through the same hardware item. The use of the wording such as "first", "second", and "third" does not indicate any order. These words can be interpreted as names.

## Claims

1. A control method for suppressing gear shift vibration in an electric vehicle, comprising:

   acquiring a gear rotation distance when a gear-meshing action is started during gear shift of a vehicle;
   controlling an electric motor to execute the gear-meshing action with minimum gear-meshing torque in response to the gear rotation distance being smaller than a set distance; wherein the minimum gear-meshing torque is minimum torque, which is pre-calibrated and required by the electric motor to rotate at a rotation speed greater than a set rotation speed value in a set gear of the vehicle; and
   controlling the electric motor to execute the gear-meshing action with target gear-meshing torque until the gear-meshing action is completed in response to the gear rotation distance being greater than or equal to the set distance, and smaller than or equal to an actual gear clearance of the electric motor, wherein the target gear-meshing torque is smaller than the minimum gear-meshing torque.

2. The control method according to claim 1, wherein the controlling the electric motor to execute the gear-meshing action with the target gear-meshing torque, comprises:
   controlling torque executed by the electric motor to decay from the minimum gear-meshing torque with a set slope during the gear-meshing process of the electric motor.

3. The control method according to claim 2, wherein the controlling the electric motor to execute the gear-meshing action with the minimum gear-meshing torque, comprises:

   controlling the electric motor to execute the gear-meshing action with first minimum gear-meshing torque when a gear of the vehicle is shifted from a second gear to a first gear, wherein the first minimum gear-meshing torque is torque executed by the electric motor corresponding to the gear of the vehicle being in the first gear and the electric motor being at the set rotation speed; and
   controlling the electric motor to execute the gear-meshing action with second minimum gear-meshing torque when the gear of the vehicle is shifted from the first gear to the second gear, wherein the second minimum gear-meshing torque is torque executed by the electric motor corresponding to the gear of the vehicle being in the second gear and the electric motor being at the set rotation speed.

4. The control method according to claim 3, wherein the controlling the torque executed by the electric motor to decay from the minimum gear-meshing torque with the set slope, comprises:

when the gear of the vehicle is shifted from the second gear to the first gear, controlling the torque executed by the electric motor to linearly decay from the first minimum gear-meshing torque with a first slope to cause the torque executed by the electric motor to decay to 0 before the gear-meshing process is completed, in response to the gear rotation distance being greater than or equal to a first set distance and being smaller than or equal to the actual gear clearance of the electric motor; and

when the gear of the vehicle is shifted from the first gear to the second gear, controlling the torque executed by the electric motor to linearly decay from the second minimum gear-meshing torque with a second slope to cause the torque executed by the electric motor to decay to 0 before the gear-meshing process is completed, in response to the gear rotation distance being greater than or equal to a second set distance and being smaller than or equal to the actual gear clearance of the electric motor.

5. The control method according to claim 2, wherein before the controlling the electric motor to execute the gear-meshing action with the minimum gear-meshing torque, the control method further comprises:

acquiring the set distance and the set slope determined by a set calibration method;
wherein the set calibration method comprises:

setting the torque executed by the electric motor to be the minimum gear-meshing torque corresponding to a target gear when the gear of the vehicle is shifted to the target gear and the gear-meshing action is started;
controlling the set distance to increase gradually from an initial distance to a target distance with a first step size, and controlling the set slop to increase from 0 to 1 with a second step size at a different set distance, and recording a combination of the set distance and the set slope that satisfy a set condition; wherein the set condition comprises that when the gear rotation distance is the set distance, the torque executed by the electric motor linearly decay from the minimum gear-meshing torque with the set slope, the torque executed by the electric motor is capable of decaying to 0 before the gear-meshing action is completed; and
selecting a group of the set distance and the set slope with a minimum fluctuation of the rotation speed of the electric motor for calibrating from the combination of the set distance and the set slope that satisfy the set condition.

6. The control method according to claim 1, further comprising:
when the gear-meshing action is started during the gear shift of the vehicle, acquiring torque of the electric motor and performing an active compensation on the torque of the electric motor until the gear-meshing action is completed.

7. The control method according to claim 6, wherein the performing the active compensation on the torque of the electric motor comprises:

acquiring a current rotation speed of the electric motor, and performing two low-pass filtering processes on the rotation speed;
determining an acceleration of the electric motor according to a low-pass filtered rotation speed, and performing filtering on the acceleration of the electric motor;
performing phase compensation to the rotation speed using a filtered acceleration of the electric motor;
calculating a torque compensation amount after a PI loop regulation by setting a rotation speed after filtering and phase compensation as a given value, and an original rotation speed of the electric motor as a feedback value;
limiting the torque compensation amount; and
performing compensation on the torque of the electric motor according to a limited torque compensation amount.

8. A control apparatus for suppressing gear changing vibration in an electric vehicle, comprising:

an acquiring module, configured to acquire a gear rotation distance when a gear-meshing action is started during gear shift of a vehicle;
a first control module, configured to control an electric motor to execute the gear-meshing action with minimum gear-meshing torque in response to the gear rotation distance being smaller than a set distance; wherein the minimum gear-meshing torque is minimum torque, which is pre-calibrated and required by the electric motor to rotate at a rotation speed greater than a set rotation speed value in a set gear of the vehicle; and
a second control module, configured to control the electric motor to execute the gear-meshing action with target gear-meshing torque until the gear-meshing action is completed in response to the gear rotation distance being greater than or equal to the set distance, and smaller than or equal to an actual gear clearance of the electric motor, wherein the target gear-meshing torque is smaller than the minimum gear-meshing torque.

9. An electronic device, comprising: a memory and a processor, wherein the memory and the processor is in a communication connection with each other, the memory stores a computer instruction, and the processor executes the computer instruction to implement the control method according to any one of claims 1-7.

10. A computer-readable storage medium, comprising computer instructions stored thereon; the computer instructions, when executed by a computer, cause the computer to implement the control method according to any one of claims 1-7.

Acquiring a gear rotation distance when a gear-meshing action is started during gear shift of a vehicle — S110

Controlling an electric motor to execute the gear-meshing action with a minimum gear-meshing torque in response to the gear rotation distance being smaller than a set distance — S120

Controlling the electric motor to execute the gear-meshing action with a target gear-meshing torque until the gear-meshing action is completed in response to the gear rotation distance being greater than or equal to the set distance, and smaller than or equal to an actual gear clearance of the electric motor, where the target gear-meshing torque is smaller than the minimum gear-meshing torque — S130

FIG. 1

200

210

220
First control module

230
Second control module

Acquiring module

FIG. 2

# EP 4 656 484 A1

## INTERNATIONAL SEARCH REPORT

International application No.

**PCT/CN2023/136197**

| A. | CLASSIFICATION OF SUBJECT MATTER |
|---|---|

B60W30/19(2012.01)i

According to International Patent Classification (IPC) or to both national classification and IPC

| B. | FIELDS SEARCHED |
|---|---|

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, CNABS, CNKI: 换挡, 扭矩, 抖动, 靠齿, 间隙, 距离, 齿轮, 过零; ENTXT, USTXT, WOTXT, DWPI, VEN: vehicle, shift, torque, gear, clearance, distance, zero.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116729394 A (VOYAH AUTOMOBILE TECHNOLOGY CO., LTD.) 12 September 2023 (2023-09-12)<br>entire document | 1-10 |
| A | CN 115648965 A (ZHIXIN TECHNOLOGY CO., LTD.) 31 January 2023 (2023-01-31)<br>description, paragraphs 4-15, and figures 1-4 | 1-10 |
| A | CN 114046352 A (BEIQI FOTON MOTOR CO., LTD.) 15 February 2022 (2022-02-15)<br>see description, paragraphs 5-17, and figures 1-2 | 1-10 |
| A | CN 109159673 A (JIANGLING MOTORS CO., LTD.) 08 January 2019 (2019-01-08)<br>entire document | 1-10 |
| A | CN 110588363 A (NIO NEXTEV LTD.) 20 December 2019 (2019-12-20)<br>entire document | 1-10 |
| A | JP 2013183504 A (DAIHATSU MOTOR CO., LTD.) 12 September 2013 (2013-09-12)<br>entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 February 2024** | **23 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/136197** |

| Patent document cited in search report | | | Publication date (day/month/year) | Patent family member(s) | Publication date (day/month/year) |
| --- | --- | --- | --- | --- | --- |
| CN | 116729394 | A | 12 September 2023 | None | |
| CN | 115648965 | A | 31 January 2023 | None | |
| CN | 114046352 | A | 15 February 2022 | None | |
| CN | 109159673 | A | 08 January 2019 | None | |
| CN | 110588363 | A | 20 December 2019 | None | |
| JP | 2013183504 | A | 12 September 2013 | None | |

Form PCT/ISA/210 (patent family annex) (July 2022)

**REFERENCES CITED IN THE DESCRIPTION**

**Patent documents cited in the description**

- CN 202310619585